# FASCICULE DE BREVET EUROPEEN

(11) **EP 1 120 956 B1**
(45) Date de publication et mention de la délivrance du brevet: **07.09.2016**
(21) Numéro de dépôt: 00403408.8
(22) Date de dépôt: 05.12.2000
(51) Int. Cl.: H04M 11/00

(54) **Système de télécommande.**
Fernsteuerungssystem
Telecontrol system

(30) Priorité: 30.12.1999 FR 9916789
(43) Date de publication de la demande: 01.08.2001
(73) Titulaire: Orange, 75015 Paris (FR)
(72) Inventeur: Le Therisien, Philippe, 75116 Paris (FR); Junker, Christian, 95170 Deuil La Barre (FR)
(74) Mandataire: Cabinet Plasseraud

(56) Documents cités:
- WO-A-94/13092
- WO-A-99/31913
- FR-A- 2 753 866
- GB-A- 2 292 652
- US-A- 5 119 412

## Description

La présente invention concerne les systèmes de télécommande d'appareils, et en particulier d'appareils électriques.

Certains types de systèmes de télécommande utilisent un réseau téléphonique pour véhiculer les ordres de commande d'un appareil.

A cet effet, les systèmes de ce type comportent généralement, raccordés au réseau téléphonique, un poste téléphonique, un centre serveur et un dispositif de pilotage de l'appareil associé à un dispositif récepteur d'appels recevant les ordres de commande transmis par le poste téléphonique, par l'intermédiaire du centre serveur, et comportant des moyens de décodage des ordres de commande.

Pour procéder à la télécommande de l'appareil, il convient simplement de composer le numéro téléphonique du centre serveur de manière à établir une liaison téléphonique avec ce dernier, d'entrer, le cas échéant, en utilisant le clavier du poste téléphonique, un code correspondant à l'identité de l'appareil à commander et de composer un code correspondant à un ordre de commande de l'appareil.

Après décodage de ce code par le dispositif de pilotage, l'ordre de commande est transmis à l'appareil.

Ce type de système est relativement efficace pour piloter à distance des appareils de différentes natures.

Il comporte cependant un inconvénient majeur relatif au fait qu'aucun accusé de réception n'est transmis vers le poste téléphonique. Il n'est donc pas possible de déterminer si la commande a effectivement été réalisée.

Un autre exemple ce trouve dans le document US5119412, Le but de l'invention est de pallier cet inconvénient.

Elle a donc pour objet un système de télécommande d'au moins un appareil, comprenant, raccordés à un réseau téléphonique, un poste téléphonique et un dispositif de pilotage de l'appareil, ledit dispositif de pilotage étant associé à un dispositif récepteur d'appels recevant des ordres de commande transmis par le poste téléphonique et comportant des moyens de décodage des ordres de commande, caractérisé en ce qu'il comporte en outre des éléments de circuit de téléphonie raccordés au dispositif de pilotage et comportant une mémoire dans laquelle est stocké le numéro téléphonique du poste téléphonique à rappeler, pour provoquer l'appel de ce dernier sous la commande du dispositif de pilotage.

Le système de télécommande selon l'invention peut en outre comporter une ou plusieurs des caractéristiques suivantes :
- les éléments de circuit de téléphonie sont constitués par des éléments de circuit de téléphonie d'un poste téléphonique mobile,
- le dispositif de pilotage comporte, stockés en mémoire, des moyens pour activer le poste mobile au plus tôt lors de la transmission, vers l'appareil, d'un ordre de commande,
- le dispositif récepteur d'appels étant constitué par un terminal de radio-messagerie, le système comporte un centre serveur raccordé au réseau téléphonique par l'intermédiaire duquel le terminal de radio-messagerie reçoit les ordres de commande,
- le dispositif récepteur d'appels est constitué par les organes de réception d'appel du poste mobile.

D'autres caractéristiques et avantages ressortiront de la description suivante, donnée uniquement à titre d'exemple, et faite en référence aux dessins annexés sur lesquels :
- la figure 1 est un schéma synoptique d'un système de télécommande conforme à l'invention, et
- la figure 2 est un schéma synoptique du dispositif récepteur d'appels.

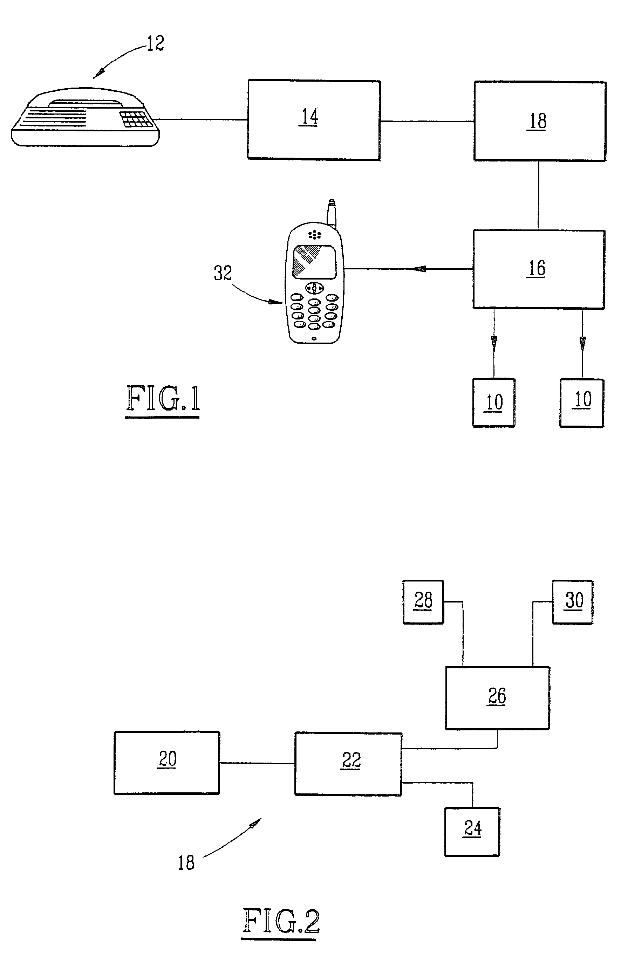

Sur la figure 1 on a représenté la structure générale d'un système de télécommande conforme à l'invention.

Il est destiné à la commande à distance d'un ou de plusieurs appareils 10. Par exemple, ces appareils peuvent être des appareils d'exécution de fonctions domestiques.

Le système comporte, raccordés à un réseau téléphonique : un poste téléphonique 12, un centre serveur 14 incorporant tous les moyens logiciels appropriés pour la fourniture du service proposé, et un dispositif 16 de pilotage de l'appareil 10 associé à un dispositif 18 récepteur d'appels.

Le réseau téléphonique par lequel le poste 12 communique avec le centre serveur 14 est soit un réseau téléphonique cellulaire soit un réseau téléphonique câblé.

Ainsi, le poste téléphonique 12 peut être constitué par un poste mobile cellulaire ou par un poste téléphonique fixe.

Dans le premier cas, le poste est raccordé au réseau par une liaison de type hertzienne.

Le dispositif de pilotage 16 est principalement constitué par un microcontrôleur qui comporte, stocké en mémoire, un algorithme de décodage des ordres véhiculés par le réseau téléphonique, en provenance du poste 12. Après décodage de ces ordres, il les transmet aux appareils 10 pour provoquer l'exécution des ordres par ces derniers.

Selon un mode de réalisation particulier, le dispositif 18 récepteur d'appel est constitué par un terminal de radio-messagerie. Dans ce cas, il communique avec le serveur 14 par ondes hertziennes.

Comme on le voit sur la figure 2, ce terminal incorpore principalement un organe 20 récepteur d'ondes radio raccordé à un microcontrôleur 22 dans lequel est stocké un algorithme de décodage des signaux reçus par l'organe récepteur 20 de manière à vérifier, comme cela est classique, que le terminal 18 est effectivement le destinataire des signaux reçus.

Le microcontrôleur 22 est raccordé à un organe 24 de sonnerie et à une unité d'affichage 26 dotée de touches de commande 28 et 30.

On voit enfin sur la figure 1 que le système est complété par un poste téléphonique 32 de type mobile raccordé au microcontrôleur du dispositif de pilotage 16. Il comporte, stocké en mémoire, le numéro téléphonique du poste téléphonique 12. Le microcontrôleur du dispositif de pilotage 16 incorpore avantageusement, en mémoire, un algorithme de commande de l'activation et de la désactivation du poste mobile 32.

Le système qui vient d'être décrit fonctionne de la façon suivante. Au repos, le poste téléphonique mobile 32 est éteint. Le dispositif 18 récepteur d'appels est, quant à lui, en veille. Dans cet état, la consommation globale du système est relativement faible. Elle correspond à celle du dispositif 18 récepteur d'appels.

Un utilisateur, souhaitant piloter à distance un appareil 10, utilise le poste 12 pour établir une communication téléphonique avec le centre serveur 14.

Dans le cas où le dispositif récepteur d'appels 18 est constitué par un terminal de radio-messagerie, il entre en communication avec un opérateur et fournit à ce dernier le message à transmettre vers l'appareil 10 qu'il souhaite piloter, correspondant à l'indication de l'appareil 10 à piloter ainsi que la nature de la commande à réaliser.

Après avoir transmis à l'opérateur les ordres de commande à réaliser, il peut raccrocher.

L'opérateur procède ensuite à l'émission du message codé à destination du dispositif 18 récepteur d'appel. Après réception, ce message est transmis au microcontrôleur du dispositif de pilotage 16 au niveau duquel il est décodé. Les ordres de commande sont ensuite transmis à l'appareil 10 en vue de leur exécution.

Dès que le microcontrôleur du dispositif de pilotage 16 a transmis, vers l'appareil 10, l'ordre de commande, ou ultérieurement, il provoque l'activation du poste téléphonique mobile 32 et émet, vers ce dernier, un signal codé indiquant que l'ordre a effectivement été transmis.

En réponse, le poste mobile 32 compose le numéro téléphonique du poste 12 de manière à établir une communication téléphonique avec ce dernier. Après décroché, le message indiquant que l'ordre a été transmis est envoyé vers le poste téléphonique 12.

Le poste mobile 32 est alors désactivé.

Ainsi, l'utilisateur a la possibilité de prendre connaissance du fait que l'ordre de commande qu'il a émis a effectivement été reçu par l'appareil qu'il souhaite piloter.

Dans l'exemple de réalisation qui vient d'être décrit, un message d'accusé de réception d'un ordre de commande est transmis vers le poste mobile 32 par le microcontrôleur 16 du dispositif de pilotage. Ce message peut par exemple se présenter sous la forme d'une tonalité ou synthétisé par un dispositif de synthèse vocale. Il serait toutefois possible, en variante, de doter chaque appareil de capteurs raccordés au microcontrôleur 16 de manière que ce dernier soit en mesure d'acquérir des informations portant sur l'état dans lequel l'appareil piloté se situe, et en particulier l'état dans lequel l'appareil se situe après avoir reçu une commande.

Ainsi, à partir de ces informations, le microcontrôleur 16 élabore et transmet au poste mobile 32 un message de contrôle reflétant l'état de l'appareil après transmission de la commande, ce message étant ensuite transmis vers le poste téléphonique 12 de l'utilisateur.

Ainsi, ce dernier a la possibilité de savoir si la commande a effectivement été réalisée.

Par ailleurs, le système décrit en référence aux figures 1 et 2 comporte un dispositif récepteur d'appels spécifique, agencé, de préférence, sous la forme d'un terminal de radio-messagerie.

Il serait également possible, en variante, d'utiliser le poste téléphonique mobile 32 en tant que dispositif récepteur d'appels. Dans ce cas, le poste mobile 32 assure, d'une part, la réception des ordres de commande et les transmet au microcontrôleur 16 du dispositif de pilotage et, d'autre part, comme dans l'exemple de réalisation décrit précédemment procède à la transmission vers le poste téléphonique 12 d'un message d'accusé de réception ou de contrôle.

Cependant, le mode de réalisation selon lequel le dispositif récepteur d'appels 18 se présente sous la forme d'un terminal de radio-messagerie est avantageux dans la mesure où l'autonomie, en veille, d'un tel terminal est mieux adaptée.

Dans l'exemple de réalisation qui vient d'être décrit, le dispositif récepteur d'appel est constitué par un terminal de radio-messagerie qui communique avec le centre serveur.

Bien entendu, en variante, il serait possible d'agencer le dispositif récepteur d'appel sous la forme d'un terminal récepteur de fréquences avec lequel le poste téléphonique communique directement.

Dans ce cas, le centre serveur est omis.

## Revendications

1. Système de télécommande d'au moins un appareil (10),
le système comprenant, raccordés à un réseau téléphonique :
- un poste téléphonique (12),
- un dispositif (18) récepteur d'appels recevant des ordres de commande transmis par ledit poste téléphonique (12) et comportant des moyens de décodage des ordres de commande, et
- un dispositif (16) de pilotage de l'appareil (10), ledit dispositif de pilotage (16) étant associé à un dispositif (18) récepteur d'appels pour transmettre les ordres reçus du poste téléphonique (12) à l'appareil (10),
**caractérisé en ce que** le système comporte en outre des éléments (32) de circuit de téléphonie d'un poste téléphonique mobile, raccordés au dispositif de pilotage (16) et comportant une mémoire dans laquelle est stocké le numéro du poste téléphonique (12), pour provoquer l'appel de ce dernier sous la commande du dispositif de pilotage après la transmission vers l'appareil (10) des ordres de commande,
et **en ce que** le dispositif de pilotage (16) transmet un message d'accusé de réception d'un ordre de commande vers le poste téléphonique (12) via le poste téléphonique mobile (32).

2. Système de télécommande selon la revendication 1, **caractérisé en ce que** le dispositif de pilotage comporte, stockés en mémoire, des moyens pour activer le poste mobile après la transmission, vers l'appareil (10), des ordres de commande.

3. Système de télécommande selon la revendication 1 ou 2, **caractérisé en ce que** le dispositif récepteur d'appels étant constitué par un terminal (18) de radio-messagerie, le système comporte un centre serveur (14) raccordé au réseau téléphonique et par l'intermédiaire duquel le terminal de radio-messagerie reçoit les ordres de commande.

4. Système de télécommande selon l'une quelconque des revendications 1 à 3, **caractérisé en ce que** le dispositif récepteur d'appels est constitué par les organes de réception d'appel du poste mobile (32).

## Patentansprüche

1. Fernsteuerungssystem für mindestens ein Gerät (10),
wobei das System, angeschlossen an ein Telefonnetz, Folgendes umfasst:
- einen Fernsprechapparat (12),
- eine Anrufempfangsvorrichtung (18), die Steuerbefehle empfängt, die von dem Fernsprechapparat (12) übertragen werden, und die Einrichtungen zur Dekodierung der Steuerbefehle umfasst, und
- eine Vorrichtung (16) zur Steuerung des Geräts (10), wobei die Steuerungsvorrichtung (16) mit einer Anrufempfangsvorrichtung (18) verbunden ist, um die vom Fernsprechapparat (12) erhaltenen Befehle an das Gerät (10) zu übertragen,
**dadurch gekennzeichnet, dass** das System ferner Telefonschaltungselemente (32) einer Mobiltelefoneinheit aufweist, die mit der Steuerungsvorrichtung (16) verbunden sind und die einen Speicher aufweisen, in den die Nummer des Fernsprechapparats (12) gespeichert ist, um den Anruf des letztgenannten unter der Steuerung der Steuerungsvorrichtung nach der Übertragung der Steuerbefehle zum Gerät (10) auszulösen,
und dadurch, dass die Steuerungsvorrichtung (16) über die Mobiltelefoneinheit (32) eine Empfangsbestätigungsmitteilung eines Steuerbefehls zum Fernsprechapparat (12) überträgt.

2. Fernsteuerungssystem nach Anspruch 1, **dadurch gekennzeichnet, dass** die Steuerungsvorrichtung, im Speicher gespeichert, Einrichtungen zum Aktivieren der Mobileinheit nach der Übertragung der Steuerbefehle zum Gerät (10) aufweist.

3. Fernsteuerungssystem nach Anspruch 1 oder 2, **dadurch gekennzeichnet, dass** die Anrufempfangsvorrichtung aus einem Funkrufterminal (18) besteht, wobei das System einen Host-Server (14) umfasst, der an das Telefonnetz angeschlossen ist und über den das Funkrufterminal die Steuerbefehle empfängt.

4. Fernsteuerungssystem nach einem der Ansprüche 1 bis 3, **dadurch gekennzeichnet, dass** die Anrufempfangsvorrichtung aus Anrufempfangsmitteln der Mobileinheit (32) besteht.

## Claims

1. Remote control system for at least one apparatus (10),
the system comprising, connected to a telephone network:
- a telephone set (12),
- a call receiver device (18) receiving control commands transmitted by said telephone set (12) and comprising means for decoding the control commands, and
- a device (16) for driving the apparatus (10), said driving device (16) being associated with a call receiver device (18) for transmitting the commands received from the telephone set (12) to the apparatus (10),
**characterized in that** the system further comprises telephony circuit elements (32) of a mobile telephone set, connected to the driving device (16) and comprising a memory in which is stored the number of the telephone set (12), to initiate the call from the latter under the control of the driving device after the transmission to the apparatus (10) of the control commands,
and **in that** the driving device (16) transmits a message acknowledging reception of a control command to the telephone set (12) via the mobile telephone set (32).

2. Remote control system according to Claim 1, **characterized in that** the driving device comprises, stored in memory, means for activating the mobile set after the transmission, to the apparatus (10), of the control commands.

3. Remote control system according to Claim 1 or 2, **characterized in that**, the call receiver device consisting of a radio paging terminal (18), the system comprises a server centre (14) connected to the telephone network and via which the radio paging terminal receives the control commands.

4. Remote control system according to any one of Claims 1 to 3, **characterized in that** the call receiver device consists of the call reception members of the mobile set (32).
